# EUROPEAN PATENT APPLICATION

(11) **EP 3 306 145 A1**
(43) Date of publication of application: **11.04.2018**
(21) Application number: 16803202.7
(22) Date of filing: 26.05.2016
(51) Int. Cl.: F16J 9/16, F02F 5/00, F16J 9/06, F16J 9/20, F16J 9/24

(54) **OIL CONTROL RING**

(30) Priority: 05.06.2015 JP 2015114824
(71) Applicant: Kabushiki Kaisha Riken, Tokyo 102-8202 (JP)
(72) Inventor: KAWANISHI Minoru, Kashiwazaki-shi Niigata 945-8555 (JP); KAKEGAWA Satoru, Kashiwazaki-shi Niigata 945-8555 (JP)
(74) Representative: Schwabe - Sandmair - Marx
(86) International application number: PCT/JP2016/065575
(87) International publication number: WO 2016/194767

(57) **Abstract**

To provide an oil ring for diesel engines having excellent independency and followability of a pair of rail portions, as well as an excellent function of sealing the side surfaces of a ring groove, a pair of upper and lower, independent, annular rings each having a gap are axially combined in a oil control ring; each of the upper and lower rings has rail portions in sliding contact with an inner wall of a cylinder, and receives an annular coil expander for pushing the rail portion to the inner wall of the cylinder; and pluralities of oil-flowing grooves are formed on at least one of the lower side surface of the upper ring and the upper side surface of the lower ring.

## Description

### FIELD OF THE INVENTION

The present invention relates to an oil control ring, which may be called "oil ring" hereinafter, particularly to a coil-expander-equipped oil control ring used in diesel engines, etc.

### BACKGROUND OF THE INVENTION

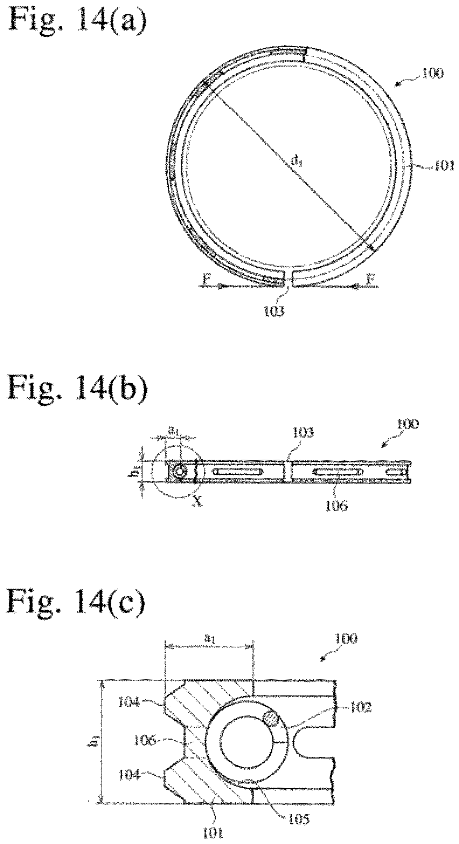

Oil control rings used in diesel engines are mostly coil-expander-equipped oil rings, which are described in Non-Patent References 1 and 2. Figs. 14(a) and 14(b) are respectively a plan view and a front view showing a coil-expander-equipped oil ring 100, and Fig. 14(c) is an enlarged view showing a cross section X in Fig. 14(b). The coil-expander-equipped oil ring 100 comprises an oil ring body 101 having a gap 103, and a coil expander 102, which pushes the oil ring body 101 radially outward toward an inner wall of a cylinder. The oil ring body 101 comprises a pair of rail portions 104, 104 axially arranged on the outer peripheral side, a groove 105 receiving the coil expander 102 on the inner peripheral side, and oil windows 106 penetrating from the outer peripheral side to the inner peripheral side, the rail portions 104, 104 being brought into contact with an inner wall of a cylinder at a predetermined surface pressure to scrape an excessive lubricating oil, thereby forming a proper oil film. The scraped excessive lubricating oil is returned to an oil pan through the oil windows 106 and oil holes (not shown) on the rear side of a ring groove of a piston, in which the oil ring 100 is received.

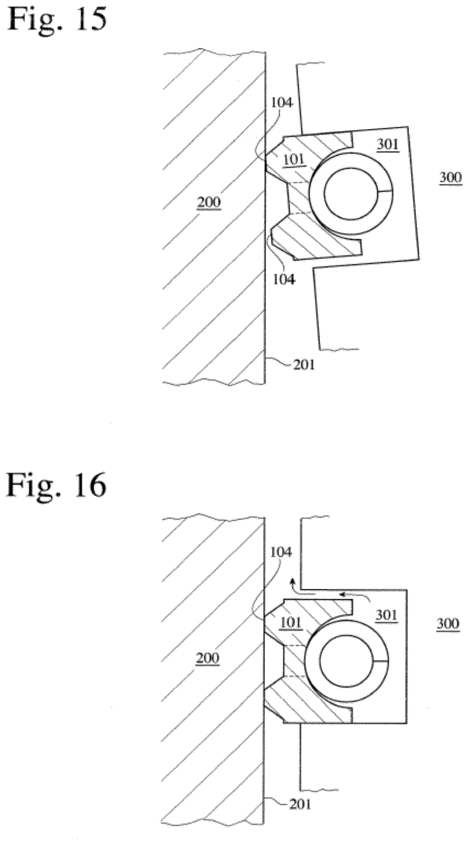

However, the oil ring has such an essential defect that because a pair of rail portions 104, 104 are integral with the oil ring body 101, as shown in Fig. 15, for example, only one of the rail portions 104, 104 (upper rail portion 104) is in contact with an inner wall 201 of the cylinder, while the other rail (lower rail portion 104) does not follow the inner wall 201 of the cylinder, failing to exhibit a sufficient oil-scraping function, when the oil ring is used in a cylinder with low circularity, or when a piston is precessing.

Also, because the pushing direction of the coil expander is perpendicular to an axial direction of the oil ring body, the oil ring does not have a function of sealing side surfaces of a ring groove, so that an oil in the ring groove flows into a combustion chamber through gaps between the ring groove 301 of the piston 300 and the oil ring body 101, resulting in increased oil consumption, as shown in Fig. 16.

In the above coil-expander-equipped oil rings, oil ring bodies are mostly I-cross-sectioned steel bodies produced by the plastic working of steel wires for small-diameter oil rings for automobiles, and cast iron ring bodies for large-diameter oil rings having nominal diameters (d₁) of more than 200 mm for vessels. The steel-made, I-shape oil ring bodies can have more followability than the cast-iron-made oil ring bodies, because the former have higher strength and toughness, as well as more cross section shrinkability. However, problems that a pair of the above rail portions cannot move independently because they are integral, and that they do not have a function of sealing side surfaces of the ring groove, are still not solved. Further, the production of large-diameter oil rings from steel wires needs wires having large cross section areas, which are not easy to handle, requiring large rolling machines and heat treatment apparatuses. Accordingly, the formation of large-diameter steel rings from wires has not been practically conducted.

To provide a combined oil ring having such a shape as to be used in high-pressure engines such as diesel engines, etc., with improved followability, and an improved function of sealing side surfaces of a ring groove, Patent Reference 1 discloses a combined oil ring having a pair of side rail portions separate from an oil ring body (support ring in Patent Reference 1) in place of a pair of rail portions, the support ring having inclined ears for an improved function of sealing the ring groove side surfaces.

To solve the above problem, Patent Reference 2 discloses an expander-combined oil ring comprising an upper ring having inner and outer center-high peripheral surfaces and a vertically symmetric cross section, a lower ring having inner and outer center-high peripheral surfaces and a vertically symmetric cross section, and a coil expander in contact with the inner peripheral surfaces of the upper and lower rings, without support rings of side rail portions.

However, the oil ring of Patent Reference 1 having a 4-piece structure, and the oil ring of Patent Reference 2 having a 3-piece structure free of a support ring, suffer the problem that they are not easily attached to a ring groove of a piston and assembled to a cylinder.

### PRIOR ART REFERENCES

Patent Reference 1: JP 5-231540 A
Patent Reference 2: JP 8-261325 A
Patent Reference 3: JP 2014-237152 A
Non-Patent Reference 1: JIS B8032-12, "Internal Combustion Engine, Small-Diameter Piston Ring, No. 12: Coil-Expander-Equipped Oil Control Ring," 1998.
Non-Patent Reference 2: JIS B8037-8, "Internal Combustion Engine, Large-Diameter piston ring, No. 8: Coil-Expander-Equipped Oil Control Ring," 1998.

### OBJECT OF THE INVENTION

In view of the above problems, an object of the present invention is to provide an oil ring comprising a pair of rail portions having excellent independency and followability, as well as an excellent side-surface-sealing function of ring grooves.

### DISCLOSURE OF THE INVENTION

As a result of intensive research on oil rings for diesel engines, the inventors have found that by replacing a pair of upper and lower rail portions by separate rings which are radially independently expandable, and by arranging a coil expander in each ring, an oil ring having excellent followability can be obtained. Also, an axially expandable resilient member interposed between a pair of upper and lower rings provides the oil ring with an excellent function of sealing the side surfaces of the ring groove.

Thus, the oil control ring of the present invention comprises a pair of axially combined, upper and lower, independent, annular rings each having a gap;
each of the upper and lower rings having a rail portion brought into sliding contact with an inner wall of a cylinder, and receiving an annular coil expander for pushing the rail portion to the inner wall of the cylinder; and
pluralities of oil-flowing grooves being formed on at least one of a lower side surface of the upper ring and an upper side surface of the lower ring.

The upper and lower rings are preferably combined such that their gaps are deviated from each other.

The oil-flowing grooves on the upper side surface of the lower ring are preferably inclined to have cross section areas increasing from the outer peripheral side to the inner peripheral side.

An annular resilient member having a gap is preferably interposed between the upper and lower rings, and the resilient member is preferably a wave spring.

It is preferable that one of the upper and lower rings has a pin, and the other has a hole or notch for receiving the pin, and that when the pin is received in the pin-receiving hole or notch directly or through the gap of the resilient member, the pin-receiving hole or notch has sufficient radial clearance, such that the rail portions of the upper and lower rings can follow the inner wall of the cylinder. Particularly preferable is that the lower ring has the pin on the upper side surface, while the upper ring has the pin-receiving hole or notch on the lower side surface. The oil-flowing grooves on the lower side surface of the upper ring are preferably opposing the oil-flowing grooves on the upper side surface of the lower ring.

The oil control ring is preferably made of steel. The production of the oil control ring by steel is effective particularly when the oil control ring has a nominal diameter of more than 200 mm and 1000 mm or less.

### EFFECTS OF THE INVENTION

Because the oil control ring of the present invention comprises upper and lower separate rings in place of a pair of upper and lower rail portions, each separate ring receiving a coil expander, the upper and lower rings can be radially independently expanded, thereby scraping an excessive oil residing on an inner wall of a cylinder without being affected by a secondary motion such as precession of a piston, exhibiting a sufficient oil-controlling function, and contributing to the reduction of oil consumption. Of course, the upper and lower separate rings with reduced cross section areas have improved followability to a cylinder wall. Oil-flowing grooves formed on only one side surface of each of the upper and lower rings provide improved sealability of the side surfaces of the ring groove. A resilient member such as a wave spring interposed between upper and lower rings can further improve the sealability of side surfaces. By forming a large-diameter steel ring having a nominal diameter of more than 200 mm by ring rolling, the axial width and radial thickness of the ring can be reduced, resulting in improved followability, thereby largely contributing to improvement in fuel efficiency by reducing the oil consumption and tension of a large-diameter ring.

### BRIEF DESCRIPTION OF THE DRAWINGS

Fig. 1 is a cross-sectional view showing an example of the oil control rings of the present invention.
Fig. 2(a) is a plan view axially showing an example of upper rings constituting the oil control ring of the present invention.
Fig. 2(b) is an A-A cross-sectional view showing an example of upper rings constituting the oil control ring of the present invention.
Fig. 3(a) is a plan view axially showing an example of lower rings constituting the oil control ring of the present invention.
Fig. 3(b) is a B-B cross-sectional view showing an example of lower rings constituting the oil control ring of the present invention.
Fig. 4 is a view showing the oil control ring of the present invention attached to a ring groove of a piston, with its upper and lower rings opened outward, to seal side surfaces of the ring groove.
Fig. 5 is a view showing the oil control ring of the present invention attached to a ring groove of a piston, with both upper and lower rings following an inner wall of a cylinder for sliding contact even under the precession of a piston.
Fig. 6 is a cross-sectional view showing another example of the oil control rings of the present invention, with its lower ring having inclined oil-flowing grooves.
Fig. 7 is a cross-sectional view showing a further example of the oil control rings of the present invention with reduced radial ring thickness a₁.
Fig. 8 is a cross-sectional view showing a still further example of the oil control rings of the present invention, with a resilient member interposed between upper and lower rings.
Fig. 9 is a view showing the oil control ring of the present invention attached to a ring groove of a piston, which is sliding on an inner wall of a cylinder while sealing side surfaces of the ring groove by the interposed resilient member.
Fig. 10(a) is a plan view axially showing an example of resilient members (wave springs) constituting the oil control ring of the present invention.
Fig. 10(b) is a front view radially showing an example of resilient members (wave springs) constituting the oil control ring of the present invention.
Fig. 11 is a cross-sectional view showing another example of lower rings constituting the oil control ring of the present invention, which has a pin.
Fig. 12 is a cross-sectional view showing another example of upper rings constituting the oil control ring of the present invention, which has a pin-receiving hole.
Fig. 13 is a partial front view radially showing another example of the oil control rings of the present invention, with a pin of a lower ring received in a pin-receiving hole of an upper ring, oil grooves of the upper ring opposing oil grooves of the lower ring, and gap ends of a wave spring residing in oil grooves adjacent to the pin and the pin-receiving hole.
Fig. 14(a) is a plan view axially showing an example of conventional coil-expander-equipped oil control rings.
Fig. 14(b) is a front view radially showing an example of conventional coil-expander-equipped oil control rings.
Fig. 14(c) is an enlarged view showing a cross section X of an example of conventional coil-expander-equipped oil control rings.
Fig. 15 is a view showing a conventional coil-expander-equipped oil control ring attached to a ring groove of a piston, which is sliding on an inner wall of a cylinder, with one rail portion (lower rail portion) not following an inner wall of a cylinder, under the precession of a piston.
Fig. 16 is a view showing a conventional coil-expander-equipped oil control ring attached to a ring groove of a piston, which is sliding on an inner wall of a cylinder without sealing the side surfaces of the ring groove.

### DESCRIPTION OF THE PREFERRED EMBODIMENTS

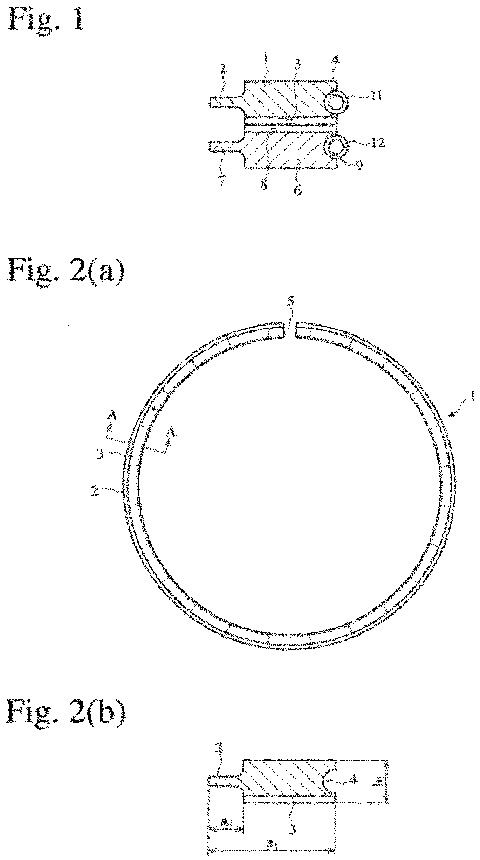

Fig. 1 shows a cross section of an oil control ring according to an embodiment of the present invention, in parallel with an axial direction passing through a centerline of the oil control ring. The oil control ring comprises a pair of axially combined, upper and lower, independent, annular rings 1, 6, each having a gap, each of the upper and lower rings 1, 6 having a rail portion 2, 7 on the outer peripheral side, which is brought into sliding contact with an inner wall of a cylinder; and annular coil expanders 11, 12 each received in each coil-expander-receiving groove 4, 9 on the inner peripheral side of each ring 1, 6 for pushing each rail portion 2, 7 to the inner wall of the cylinder. Pluralities of oil-flowing grooves 3 formed on a lower side surface of the upper ring 1 are opposing pluralities of oil-flowing grooves 8 formed on an upper side surface of the lower ring 6.

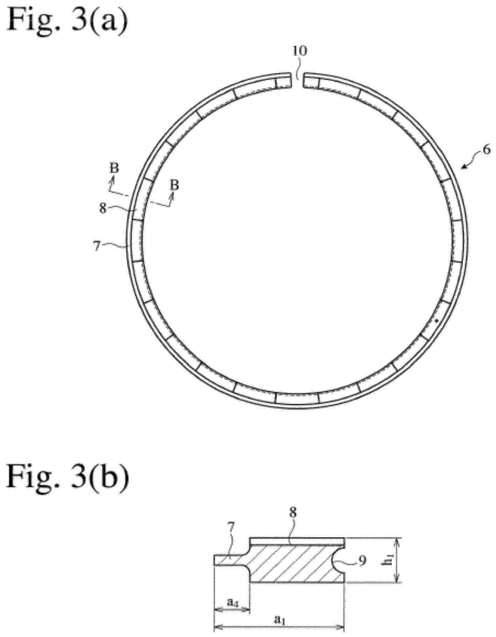

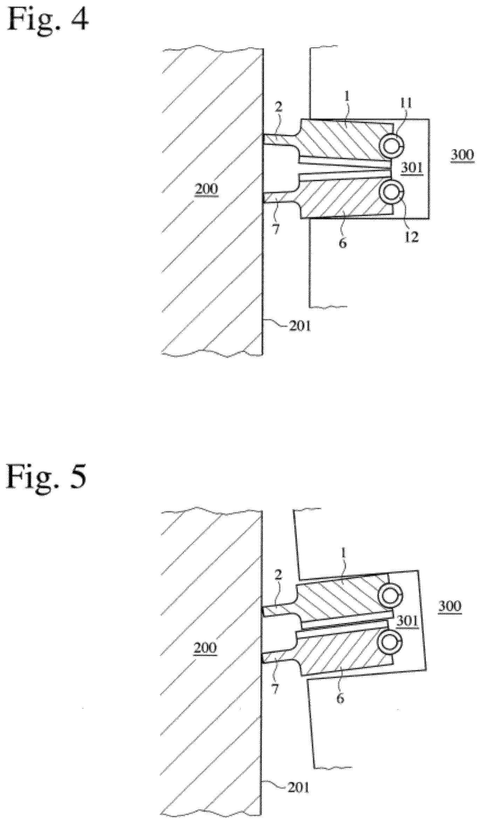

Figs. 2(a) and 2(b) show the upper ring 1, and Figs. 3(a) and 3(b) show the lower ring 6. To seal the side walls of the ring groove, the oil-flowing grooves 3, 8 are not formed on surfaces facing the side walls of a piston ring groove (the upper side surface of the upper ring 1 and the lower side surface of the lower ring 6). The oil-flowing grooves 3, 8 formed only on the lower side surface of the upper ring 1 and the upper side surface of the lower ring 6 provide further improved sealing of the side surfaces. Because a center of gravity of the upper ring 1 is deviated upward from the radial centerline, and because a center of gravity of the lower ring 6 is deviated downward from the radial centerline, the pushing directions of the coil expanders 11, 12 are such that the rail portion 2 of the upper ring 1 is inclined slightly upward, while the rail portion 7 of the lower ring 6 is inclined slightly downward, as shown in Fig. 4.

With the oil-flowing grooves 3, 8 on the lower side surface of the upper ring 1 and the upper side surface of the lower ring 6, the upper and lower rings 1, 6 have a reduced contact area, resulting in reduced friction. Accordingly, the upper and lower rings 1, 6 surely independently follow the inner wall of the cylinder.

Because the upper and lower rings 1, 6 can be radially independently expanded as described above, as shown in Fig. 5, the rail portion 2 of the upper ring 1 and the rail portion 7 of the lower ring 6 also slide on the inner wall 201 of the cylinder 200 independently and closely, even under the precession of a piston, contributing to the reduction of oil consumption.

The oil-flowing grooves 3, 8 may have relatively wide opening ratios, possibly opening ratios of 10-20%.

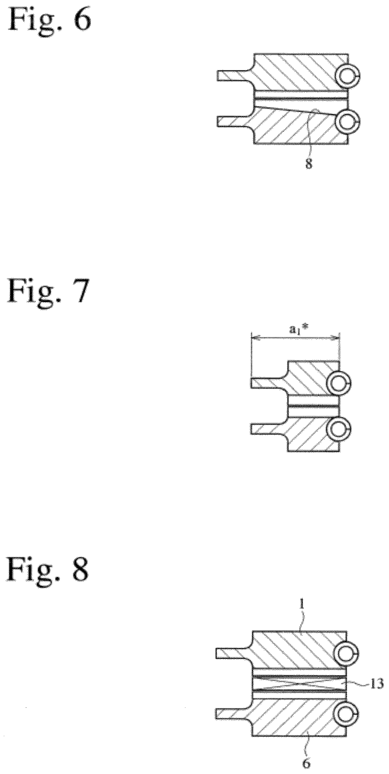

When the oil-flowing grooves 8 of the lower ring 6 are inclined to have cross section areas increasing from the outer peripheral side to the inner peripheral side as shown in Fig. 6, a lubricating oil in the oil-flowing grooves 8 easily flows to a bottom of the ring groove, making the lubricating oil less retainable between the upper and lower rings 1, 6. The inclination angle of the oil-flowing grooves 8 to a direction perpendicular to the ring axis is preferably 3-10°, more preferably 5-8°.

The oil control ring of the present invention has a smaller axial width h₁ than those of conventional coil-expander-equipped oil control rings. As shown in Fig. 7, the radial thickness a₁ can be reduced to a limit a₁*, as long as the combined upper and lower rings can be stably attached to the ring groove. Because the oil control ring of the present invention has more reducible cross section area than those of conventional coil-expander-equipped oil control rings, it can have improved followability to the inner wall of the cylinder, resulting in reduced oil consumption.

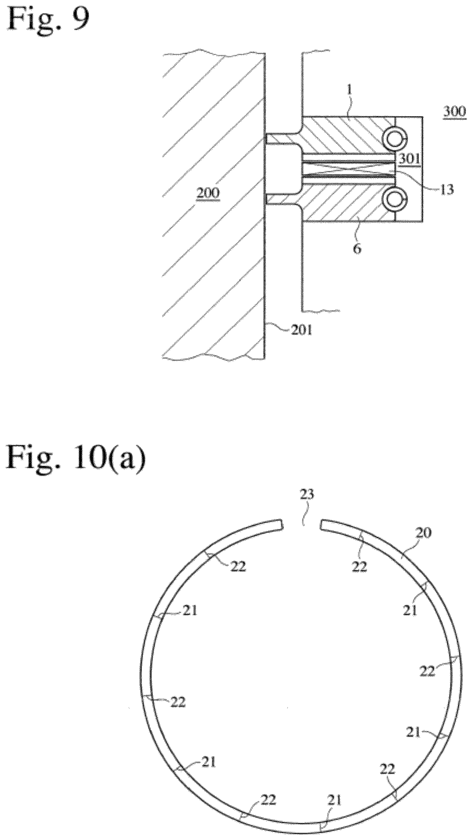

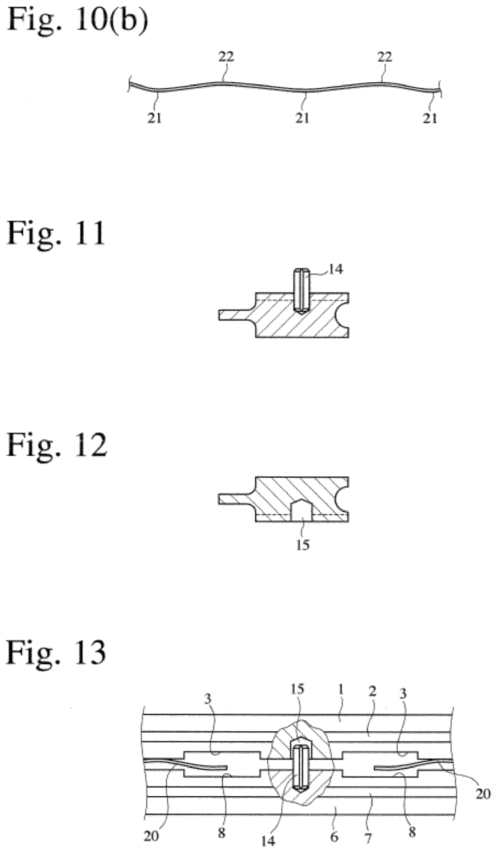

With the oil-flowing grooves formed on one side surface of each ring, the oil control ring of the present invention can seal the side surfaces of the ring groove, and an annular resilient member 13 having a gap may be interposed between the upper and lower rings 1, 6 as shown in Fig. 8, to achieve further improved sealing of the side surfaces. As shown in Fig. 9, the resilient member 13 expands axially to push the upper ring 1 to the upper side surface of the ring groove and the lower ring 6 to the lower side surface of the ring groove. The resilient member 13 is preferably, for example, a plate spring or a wave spring 20 as shown in Figs. 10(a) and 10(b), which has a small contact area with the upper and lower rings 1, 6 to avoid friction increase. The wave spring 20 comprises pluralities of lower portions 21 and upper portions 22 formed circumferentially alternately, and a gap 23. The wave spring 20 is preferably arranged in the oil-flowing grooves, such that the lower portions 21 are in contact with the upper side surface of the lower ring 6, and that the upper portions 22 are in contact with the lower side surface of the upper ring 1.

The oil control ring of the present invention preferably has a rotation-stopping structure for preventing the free rotation of the upper and lower rings 1, 6 to avoid the alignment of the gap 5 of the upper ring 1 with the gap 10 of the lower ring 6. For example, the lower ring 6 preferably has a pin 14, which is to be connected to the upper ring 1, on the upper side surface as shown in Fig. 11, and the upper ring 1 preferably has a pin-receiving hole or notch 15, which is to be connected to the pin 14 of the lower ring 6, on the lower side surface as shown in Fig. 12. When the pin 14 is connected to (received in) the pin-receiving hole or notch 15, there is preferably sufficient clearance between them, such that the rail portions 2, 7 of the upper and lower rings 1, 6 can radially follow the inner wall of the cylinder. In this respect, the notch is more preferable than the pin-receiving hole. When the resilient member (wave spring 20) is interposed between the upper and lower rings 1, 6, the pin 14 is preferably received in the pin-receiving hole or notch 15 in the gap of the wave spring 20 as shown in Fig. 13.

It is particularly preferable that the oil-flowing grooves 3 of the upper ring 1 are opposing the oil-flowing grooves 8 of the lower ring 6. With their opposing arrangement, the cross section areas of the oil-flowing grooves become double, so that an oil can easily flow into the oil-flowing grooves. In any of Figs. 1, 4-9 and 13, the oil-flowing grooves 3, 8 of the upper and lower rings 1, 6 are opposing each other.

In the oil control ring of the present invention, the upper and lower rings 1, 6 can be made of cast iron, though they can be made of steel. Though the production of the upper and lower rings by coiling a steel wire is difficult because it needs a large apparatus as described above, Patent Reference 3 discloses that a large-diameter steel ring can be produced by subjecting a columnar steel rod to hot forging such as ring rolling to form a cylindrical steel pipe, and cutting the cylindrical steel pipe by a cutting bite or a cutting saw, cutting the inner and outer surfaces by turning, grinding the side surfaces, etc.

In the present invention, too, large-diameter steel rings as the upper and lower rings 1 and 6 in the oil control ring can be produced by hot forging including the above ring rolling according to the teaching of Patent Reference 3. Of course, a small-diameter ring can be produced by a conventional steel-wire-coiling method.

Though not particularly restrictive, the oil control ring of the present invention may be made of steel, which is preferably selected from carbon steel, low-alloy steel, spring steel, bearing steel, and martensitic stainless steel. Preferably, the carbon steel is high-carbon steel containing about 0.6-0.8% by mass of C, the spring steel is SUP9, SUP10, SUP12, etc., the bearing steel is SUJ2, and the martensitic stainless steel is SUS420J2 or SUS440B. Steel is selected depending on the requirements of high-temperature strength, thermal conductivity, thermal sagging resistance, etc.

### Example 1

A steel rod of 110 mm in outer diameter and 200 mm in length, which had a composition comprising by mass 0.45% of C, 0.23% of Si, 0.78% of Mn, 1.04% of Cr, and 0.21 % of V, was formed into cylindrical bodies by ring rolling, and the cylindrical bodies were machined to form upper and lower rings each having a nominal diameter (d₁) of 330 mm, a width (h₁) of 5 mm, and a thickness (a₁) of 10 mm. Each rail portion had a length (a₄) of 2.5 mm, and its surface was coated with a hard chromium plating of about 100 µm. Each coil-expander-receiving groove had a diameter of 2.9 mm on the inner diameter side. 12 oil-flowing grooves each having a width of 40 mm and a depth of 1.5 mm were formed on the lower side surface of the upper ring and the upper side surface of the lower ring, respectively. The lower ring was provided with a pin in an upper side surface portion adjacent to the second oil-flowing grooves counterclockwise from the gap, and the upper ring was provided with a pin-receiving hole in a lower side surface portion adjacent to the fourth oil-flowing grooves clockwise from the gap. A coil expander of SWP-B having a diameter of 2.8 mm was assembled to each ring, to exert adjusted surface pressure of 0.7 MPa.

### Comparative Example 1

As Comparative Example 1, a conventional oil ring body of gray cast iron having a nominal diameter (d₁) of 330 mm, a width (h₁) of 10 mm, and a thickness (a₁) of 7.9 mm, which had the coil expander-equipped oil control ring shape shown in Fig. 14, was produced. The number of windows was 20. The rail portions were coated with the same hard chromium plating as in Example 1. A coil expander of SWP-B having a coil diameter of 5.1 mm was assembled in the oil ring body, to exert adjusted surface pressure of 0.7 MPa, as in Example 1.

### Actual engine test

Using a 6-cylinder, 4-stroke, intermediate-speed diesel engine having a bore diameter of 330 mm, the combined oil ring of Example 1 and the conventional coil-expander-equipped oil ring of Comparative Example 1 as oil rings were subjected to an actual engine test under predetermined operation conditions for 200 hours, to measure oil consumption. Top, second and third rings used in addition to the oil ring were conventional ones. The actual engine test was conducted two times for each oil ring, and the oil consumption was an average value of two tests. Assuming that the oil consumption in Comparative Example 1 was 100, the oil consumption in Example 1 was 74.

### Example 2

Upper and lower rings were produced in the same manner as in Example 1 except for changing the radial thickness (a₁) to 8 mm. The actual engine test was conducted in the same manner as in Example 1 to measure oil consumption. As a result, the oil consumption in Example 2 was 39. The oil consumption was drastically reduced by decrease in the radial thickness (a₁).

### Example 3

The actual engine test was conducted in the same manner as in Example 1, except that a plate spring having a width of 0.6 mm in a cold state was interposed between the upper and lower rings. The pin-receiving hole of the upper ring and the pin of the lower ring were aligned with the gap of the plate spring. The same measurement as in Example 1 revealed that the oil consumption in Example 3 was 65.

### Example 4

The actual engine test was conducted in the same manner as in Example 1, except that a wave spring having an outer diameter of 325 mm, an inner diameter of 310 mm, a thickness of 0.2 mm and a free height of 1.0 mm, with the number of waves being 12, was interposed between the upper and lower rings. The oil ring groove of the piston was expanded to such a width as being able to receive the wave-spring-equipped oil ring of the present invention. The same measurement as in Example 1 revealed that the oil consumption in Example 4 was 61.

### DESCRIPTION OF REFERENCE NUMERALS

1: Upper ring
2, 7: Rail portion
3, 8: Oil-flowing groove
4, 9: Coil-expander-receiving groove
5, 10: Gap
6: Lower ring
11, 12: Coil expander
13: Resilient member
14: Pin
15: Pin-receiving hole
20: Wave spring
21: Lower portion
22: Upper portion
100: Coil-expander-equipped oil control ring
101: Oil ring body
102: Coil expander
103: Gap
104: Rail portion
105: Groove
106: Oil window
200: Cylinder
201: Cylinder inner wall
300: Piston
301: Ring groove

## Claims

1. An oil control ring comprising a pair of axially combined, upper and lower, independent, annular rings each having a gap;
each of said upper and lower rings having a rail portion brought into sliding contact with an inner wall of a cylinder, and receiving an annular coil expander for pushing said rail portion to said inner wall of said cylinder; and
pluralities of oil-flowing grooves being formed on at least one of a lower side surface of said upper ring and an upper side surface of said lower ring.

2. The oil control ring according to claim 1, wherein the position of a gap of said upper ring is deviated from the position of a gap of said lower ring.

3. The oil control ring according to claim 1 or 2, wherein the oil-flowing grooves on said upper side surface of said lower ring are inclined to have cross section areas increasing from the outer peripheral side to the inner peripheral side.

4. The oil control ring according to any one of claims 1-3, wherein an annular resilient member having a gap is interposed between said upper and lower rings.

5. The oil control ring according to claim 4, wherein said resilient member is a wave spring.

6. The oil control ring according to any one of claims 1-3,
wherein one of said upper and lower rings has a pin, and the other has a hole or notch for receiving said pin; and
wherein when said pin is received in said pin-receiving hole or notch, there is sufficient radial clearance in said pin-receiving hole or notch, such that the rail portions of said upper and lower rings can follow an inner wall of a cylinder.

7. The oil control ring according to claim 4 or 5,
wherein one of said upper and lower rings has a pin, and the other has a hole or notch for receiving said pin; and
wherein when said pin is received in said pin-receiving hole or notch in said gap of said resilient member, there is sufficient radial clearance in said pin-receiving hole or notch, such that the rail portions of said upper and lower rings can follow an inner wall of a cylinder.

8. The oil control ring according to claim 6 or 7, wherein said lower ring has said pin on the upper side surface, and said upper ring has said pin-receiving hole or notch on the lower side surface.

9. The oil control ring according to any one of claims 6-8, wherein said oil-flowing grooves on the lower side surface of said upper ring are opposing said oil-flowing grooves on the upper side surface of said lower ring.

10. The oil control ring according to any one of claims 1-9, which is made of steel.

11. The oil control ring according to claim 10, which has a nominal diameter of more than 200 mm and 1000 mm or less.
